# EUROPÄISCHE PATENTSCHRIFT

(11) **EP 0 846 219 B1**
(45) Veröffentlichungstag und Bekanntmachung des Hinweises auf die Patenterteilung: **03.03.1999**
(21) Anmeldenummer: 96922829.5
(22) Anmeldetag: 18.06.1996
(51) Int. Cl.: F01N 3/28, B01J 35/04

(54) **VORRICHTUNG UND VERFAHREN ZUR HERSTELLUNG EINES WABENKÖRPERS**
DEVICE AND PROCESS FOR PRODUCING A HONEYCOMB BODY
DISPOSITIF ET PROCEDE POUR LA FABRICATION D'UN CORPS EN NID-D'ABEILLES

(30) Priorität: 07.08.1995 DE 19528963
(43) Veröffentlichungstag der Anmeldung: 10.06.1998
(73) Patentinhaber: Emitec Gesellschaft für Emissionstechnologie mbH, 53797 Lohmar (DE)
(72) Erfinder: WIERES, Ludwig, D-51491 Overath (DE)
(74) Vertreter: Kahlhöfer, Hermann, Dipl.-Phys.
(86) Internationale Anmeldenummer: EP9602629
(87) Internationale Veröffentlichungsnummer: WO9706358

(56) Entgegenhaltungen:
- WO-A-90/03220
- WO-A-92/13636
- US-A- 4 519 120
- PATENT ABSTRACTS OF JAPAN vol. 95, no. 007 & JP 07 171413 A (USUI INTERNATL IND CO LTD), 11.Juli 1995,

## Beschreibung

Die vorliegende Erfindung bezieht sich auf eine Vorrichtung und ein Verfahren zur Herstellung eines Wabenkörpers, insbesondere eines Katalysator-Trägerkörpers, aus wenigstens einem Stapel aus einer Vielzahl von zumindest teilweise strukturierten Blechen.

Zur Verringerung der Schadstoffmenge in Abgasen, insbesondere in Kraftfahrzeugabgasen, werden Katalysatoren verwendet. Die Trägerkörper in solchen Katalysatoren können in der Form von metallischen Wabenkörpern ausgebildet sein. Solche Wabenkörper umfassen einen Stapel aus einer Vielzahl von zumindest teilweise strukturierten Blechen. Durch die U.S.-A 4,923,109 ist ein Wabenkörper bekannt, der einen gegensinnig um sich selbst und um einen Zentralbereich verschlungenen Stapel aufweist.

Ferner ist durch die WO 90/03220 ein metallischer Katalysator-Trägerkörper bekannt, der aus zumindest teilweise strukturierten Blechen aufgebaut ist. Dieser Katalysator-Trägerkörper umfaßt wenigstens drei Stapel von Blechen, wobei mindestens drei der Stapel um je eine zugehörige Knicklinie im Zentralbereich des Wabenkörpers gefaltet und im gefalteten Zustand gegensinnig umeinander und um einen Zentralbereich mit den Knicklinien verschlungen sind.

Zur Herstellung solcher Wabenkörper sind Vorrichtungen bekannt, die eine um eine Achse verdrehbare, an jedem Stapel angreifende gabelförmige Umschlingungseinrichtung und sich zu einer Form schließende Formsegmente umfaßt. Die Innenkontur der geschlossenen Form entspricht der Außenkontur des Wabenkörpers im umschlungenen Zustand. Um ein Umschlingen der Stapel bzw. des Stapels um sich selbst und um einen Zentralbereich zu gewährleisten, werden die Formsegmente zum Stapel hin so bewegt, daß während der Drehung der gabelförmigen Verschlingungseinrichtung der Stapel bzw. die Stapel am Rand der Form segmente anliegen und dieser Rand ein Widerlager bildet. Gegen Ende des Herstellungsvorgangs wird die Form vollständig verschlossen und so dem Wabenkörper seine endgültige Form verliehen.

Die bekannten Vorrichtungen weisen zwei Segmente auf, die geradlinig aufeinander zu und voneinander weg bewegbar sind. Während des Schließvorgangs besteht die Gefahr, daß wenigstens ein Formsegment sich gegen die Bewegungsrichtung des noch zu verschlingenden Abschnitts des Stapels bewegt. Gelangt das Formsegment gegen den Abschnitt, so kann es zu einer unerwünschten Deformation des Stapels bzw. der Stapel kommen. Eine solche Deformation kann dazu führen, daß einzelne Bleche des Stapels teilweise verbogen werden. Die Deformation der Bleche beeinflußt die Struktur des Wabenkörpers. Zum einen leidet die Festigkeit des Wabenkörpers an solchen Deformationen und zum anderen kommt es zu einer lokalen Veränderung der Kanalquerschnitte. Durch solche Veränderungen des Kanalquerschnittes wird eine ungleichmäßige Abgasverteilung durch den Wabenkörper hervorgerufen, welche die katalytische Wirkung des Wabenkörpers beeinflussen kann.

Die bekannten Wabenkörper sind im Querschnitt überwiegend kreisförmig ausgebildet. Die Herstellung anderer Querschnitte erfordert andere Herstellungsmethoden. Eine solche Herstellungsmethode ist z. B. durch die US-PS 4 519 120 bekannt. Nach dieser Herstellungsmethode wird zunächst ein Wabenkörper gewickelt und anschließend durch Werkzeuge deformiert.

Hiervon ausgehend liegt der vorliegenden Erfindung die Aufgabe zugrunde, die bekannte Vorrichtung und das bekannte Verfahren zur Herstellung eines Wabenkörpers so weiterzubilden, daß während des Herstellungsprozesses eine Deformation von Stapeln bzw. einzelnen Blechen vermieden wird. Ferner soll die Möglichkeit gegeben werden, Wabenkörper herzustellen, die einen nicht kreisförmigen Querschnitt aufweisen.

Erfindungsgemäß wird diese Aufgabe durch eine Vorrichtung mit den Merkmalen des Anspruchs 1 gelöst. Vorteilhafte Weitergestaltungen der Vorrichtung sind Gegenstand der Unteransprüche 2 bis 5. Erfindungsgemäße Verfahren zur Herstellung eines Wabenkörpers sind in den Ansprüchen 6 und 7 angegeben.

Die erfindungsgemäße Vorrichtung zum Herstellen eines Wabenkörpers, insbesondere eines Katalysator-Trägerkörpers, aus wenigstens einem Stapel aus einer Vielzahl von zumindest teilweise strukturierten Blechen, die eine Vielzahl von für ein Fluid durchlässigen Kanälen bilden, wobei die Vorrichtung eine an jedem Stapel angreifende gabelförmige Halteeinrichtung aufweist und Formsegmente, die sich zu einer Form schließen können, wobei jedes Formsegment jeweils einen Mantelabschnitt hat, die gemeinsam bei geschlossener Form die Außenform des herzustellenden Wabenkörpers ergeben, zeichnet sich dadurch aus, daß wenigstens zwei Formsegmente vorgesehen sind, die so verschieblich angeordnet sind, daß wenigstens ein Teilabschnitt eines jeden Mantelabschnittes am Stapel anliegend eine der Außenform entsprechende Bewegungsbahn in Richtung des jeweiligen freien Endes des Stapels beschreibt. Dadurch, daß wenigstens ein Teilabschnitt eines jeden Mantelabschnittes eine der Außenform entsprechende Bewegungsbahn in Richtung des jeweiligen freien Endes des Stapels beschreibt, wird der jeweilige mit dem Teilabschnitt des Formsegmentes in Kontakt stehende Abschnitt des Stapels derart verformt, daß im Endzustand der Formung der Stapel die gewünschte Außenform des herzustellenden Wabenkörpers erhält. Dadurch, daß die Richtung der Bewegungsbahn zum jeweiligen freien Ende des Stapels verläuft, wird eine Deformation der einzelnen Blechlagen bzw. Stapel im Gegensatz zum bisherigen bekannten Verfahren vermieden, da die Formsegmente die Abschnitte des Stapels in die endgültige Form schmiegen. In Abhängigkeit von der gewünschten Außenform des herzustellenden Wabenkörpers kann eine entsprechende Anzahl der Form segmente gewählt werden, die ein Umschlingen der Stapel bzw. einzelner Blechlagen bewerkstelligen. Vorzugsweise sind zwei Formsegmente vorgesehen, die im gleichen Richtungssinn verschieblich sind. Es ist festzuhalten, daß der Teilabschnitt des Mantelabschnittes des Formsegmentes während des Bewegungsablaufs unterschiedlicher Länge sein kann. Dies hängt zum einen von dem Bewegungsablauf des Formsegmentes und zum anderen von der Außenform des herzustellenden Wabenkörpers ab.

Bevorzugt wird eine Ausführungsform der Vorrichtung, bei der die Formsegmente in ihrer jeweiligen Ausgangslage gegenüberliegend positioniert sind. Vorzugsweise sind die Formsegmente paarweise gegenüberliegend positioniert. Die Bewegung der Formsegmente erfolgt insbesondere synchron. Dies ist nicht zwingend erforderlich. Hinreichend ist, daß die Geschwindigkeit der einzelnen Bewegungen der Formsegmente so unterschiedlich ist, daß die Form segmente während der Herstellung des Wabenkörpers nicht gegeneinander stoßen.

Gemäß einem weiteren vorteilhaften Gedanken wird vorgeschlagen, die Form so auszubilden, daß diese wenigstens ein radialein- und radialauswärts bewegliches Formsegment aufweist, welches ein Schließsegment bildet. Mit diesem Schließsegment wird im Endzustand die Form geschlossen, um dem Wabenkörper seine endgültige Form zu verleihen.

Nach einem erfindungsgemäßen Gedanken wird ein Verfahren zur Herstellung eines Wabenkörpers mit einer Vielzahl von für ein Fluid durchlässigen Kanälen aus einer Vielzahl von zumindest teilweise strukturierten Blechen vorgeschlagen. Nach diesem Verfahren wird zunächst ein Stapel aus einer Mehrzahl von zumindest teilweise strukturierten Blechen geschichtet. Der Stapel wird in eine offene Form eingebracht und in dieser von einer Halteeinrichtung in einem Zentralbereich gehalten. Die Enden des Stapels erstrecken sich von dem Zentralbereich radial auswärts. Wenigstens zwei Formsegmente werden aus ihren Ausgangslagen jeweils so verschoben, daß wenigstens ein Teilabschnitt eines jeden Mantelabschnitts zur Anlage am Stapel gelangt. Danach werden die Formsegmente so entlang einer der Außenform entsprechenden Bewegungsbahn bewegt, daß wenigstens ein Teilabschnitt eines jeden Mantelabschnittes stets in Anlage an den Stapel ist. Nachdem ein vorgegebener Umschlingungsgrad der Stapel erreicht ist, wird die Form geschlossen.

Zur Herstellung von Wabenkörpern wird ferner ein Verfahren vorgeschlagen, bei dem eine Mehrzahl von Stapeln aus einer Mehrzahl von zumindest teilweise strukturierten Blechen geschichtet wird. Jeder Stapel wird entlang einer Knicklinie gefaltet. Die Stapel werden in eine offene Form eingebracht und in dieser von einer Halteeinrichtung in einem zentralen Bereich gehalten. Anschließend werden wenigstens zwei Formsegmente aus ihren Ausgangslagen jeweils so verschoben, daß wenigstens ein Teilabschnitt eines jeden Mantelabschnitts des Formsegments zur Anlage am jeweiligen Stapel gelangt. Die Formsegmente werden einer der Außenform entsprechenden Bewegungsbahn bewegt, so daß ein Teilabschnitt eines jeden Mantelabschnittes eines Formsegments stets am Stapel anliegt. Nachdem ein vorgegebener Umschlingungsgrad der Stapel erreicht worden ist, wird die Form geschlossen.

Durch diese Vorrichtung und das Verfahren wird die Möglichkeit eröffnet, Wabenkörper herzustellen, die einen vom kreisförmigen Querschnitt verschiedenen Querschnitt aufweisen. So ist z. B. die Herstellung eines ovalen Wabenkörpers oder eines Wabenkörpers in der Race-Track-Form möglich, ohne daß eine Deformation der Stapel bzw. Bleche notwendig ist. Durch dieses Verfahren und die Vorrichtung wird ein Wabenkörper erzielt, der eine gleichmäßige Struktur aufweist.

Weitere Vorteile und Merkmale der Vorrichtung und des Verfahrens werden anhand eines Ausführungsbeispiels erläutert, welches in der Zeichnung dargestellt ist. Es zeigen:
- Fig. 1: schematisch in der Draufsicht eine Vorrichtung zur Herstellung eines Wabenkörpers mit offener Form,
- Fig. 2 bis 4: unterschiedliche Lagen beweglicher Form segmente,
- Fig. 5: die teilweise geschlossene Form und
- Fig. 6: die geschlossene Form in der Draufsicht.

Die Vorrichtung weist eine gabelförmige Halteeinrichtung auf, die den Stapel 1 im Zentralbereich der Form festhält. Der Stapel 1 wird um die Dorne 13, 14 der Halteeinrichtung verschlungen. Die Form weist vier Formsegmente 2, 3, 4 und 5 auf. Sie bilden zusammen im geschlossenen Zustand eine Form 10. Jedes Formsegment 2 bis 5 weist einen Mantelabschnitt 6, 7, 8 und 9 auf, die gemeinsam bei geschlossener Form 10 eine Außenform 15 des herzustellenden Wabenkörpers ergeben.

Die Formsegmente 3 und 5 sind radialein- und radialauswärts verschieblich angeordnet.

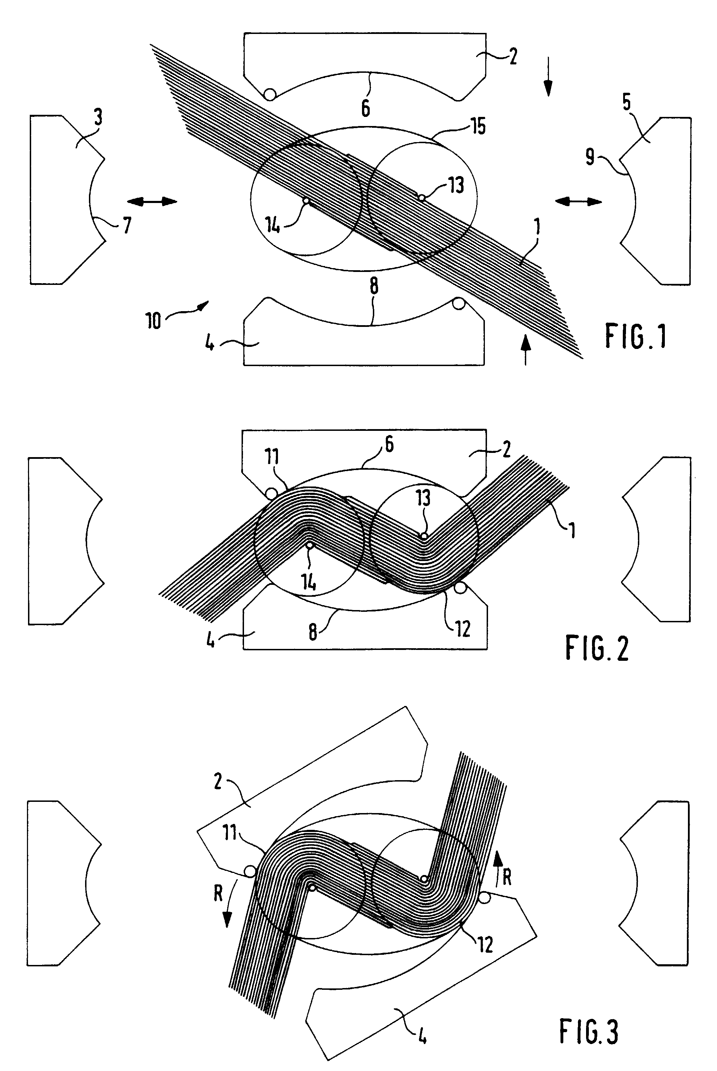

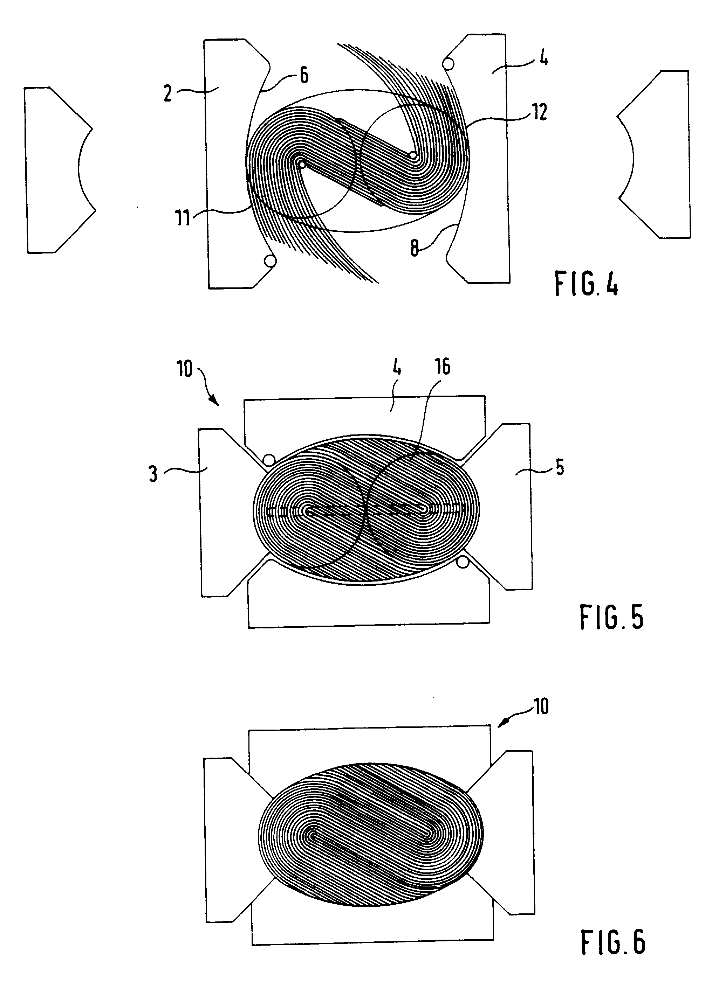

In der Fig. 2 sind die Formsegmente 2 und 4 zur Anlage an den Stapel 1 gebracht worden. Der Teilabschnitt 11 des Mantelabschnitts 6 des Formsegments 2 bzw. der Teilabschnitt 12 des Mantelabschnitts 8 des Formsegments 4 liegt an dem Stapel 1 an. Der von dem Dorn 14 bzw. 13 aus der Form herausragende Abschnitt des Stapels ist entsprechend der Krümmung des Teilabschnittes 11 bzw. 12 umgebogen. In der Fig. 3 ist die Position der Formsegmente 2 und 4 dargestellt, die sie einnehmen, wenn eine 30°-Drehung der Formsegmente 2 und 4 vollzogen worden ist. Während der Drehung in der Pfeilrichtung R wurde ein weiterer Abschnitt des Stapels verformt. Die Drehung der Formsegmente 2 und 4 erfolgte dabei so, daß der Teilabschnitt 11 bzw. 12 des Formsegments 2 bzw. 4 stets am Stapel anlag. Durch eine weitere Drehung der Formsegmente 2 und 4 nehmen diese eine Position, wie sie in der Fig. 4 dargestellt ist. Die Formsegmente 2 und 4 sind dabei um 90° gegenüber ihrer ursprünglichen Lage verdreht worden. Wie besonders aus der Fig. 4 ersichtlich ist, ist der Teilabschnitt 11 bzw. 12 des Mantelabschnitts 6 bzw. 8 wesentlich größer als in den Fig. 2 und 3 ersichtlich ist. Durch eine weitere Verschiebung der Formsegmente 3 und 4 wird der Stapel in seine endgültige Form gebracht. In dem dargestellten Ausfiihrungsbeispiel ist eine Drehung der Segmente 2 und 4 um 180° ausreichend, da der Wabenkörper spiegelsymmetrisch aufgebaut ist. Die Bewegung der beiden Formsegmente 2 und 4 erfolgte synchron. Nachdem die Formsegmente 2 und 4 ihre in der Fig. 5 dargestellte Position erreicht haben, sind die beiden Formsegmente 3 und 5 radial einwärts zu dem Wabenkörper 16 herangeführt worden. Die Form 10 ist noch nicht endgültig verschlossen, wie dies aus der Fig. 5 ersichtlich ist. Durch weiteres Heranführen der einzelnen Formsegmente 2 bis 4 wird die Form 10 geschlossen, wie dies in der Fig. 6 dargestellt ist.

### Bezugszeichenliste:

- 1: Stapel
- 2 bis 5: Formsegmente
- 6 bis 9: Mantelabschnitte
- 10: Form
- 11, 12: Teilabschnitt
- 13, 14: Dorn
- 15: Außenform
- 16: Wabenkörper

## Patentansprüche

1. Vorrichtung zur Herstellung eines Wabenkörpers, insbesondere eines Katalysator-Trägerkörpers, aus wenigstens einem Stapel (1) aus einer Vielzahl von zumindest teilweise strukturierten Blechen, die eine Vielzahl von für ein Fluid durchlässigen Kanälen bilden, wobei die Vorrichtung eine an jedem Stapel (1) angreifende gabelförmige Halteeinrichtung aufweist und Formsegmente (2, 3, 4, 5), die sich zu einer Form (10) schließen können, wobei jedes Formsegment (2, 3, 4, 5) jeweils einen Mantelabschnitt (6, 7, 8, 9) hat, die gemeinsam bei geschlossener Form (10) die Außenform des herzustellenden Wabenkörpers ergeben,
**dadurch gekennzeichnet**, daß wenigstens zwei Formsegmente (2, 4) vorgesehen sind, die so verschieblich angeordnet sind, daß wenigstens ein Teilabschnitt (11, 12) eines jeden Mantelabschnittes (6, 8) am Stapel (1) anliegend eine der Außenform entsprechende Bewegungsbahn in Richtung des jeweiligen freien Endes des Stapels (1) beschreibt.

2. Vorrichtung nach Anspruch 1, dadurch gekennzeichnet, daß die Formsegmente (2, 4) im gleichen Richtungssinn (R) verschieblich sind.

3. Vorrichtung nach Anspruch 1 oder 2, dadurch gekennzeichnet, daß die Formsegmente (2, 4) in ihren jeweiligen Ausgaganslage, vorzugsweise paarweise, gegenüberliegend positioniert sind.

4. Vorrichtung nach einem der Ansprüche 1 bis 3, dadurch gekennzeichnet, daß die Formsegmente (2, 4) synchron verschieblich sind.

5. Vorrichtung nach einem der vorstehenden Ansprüche, dadurch gekennzeichnet, daß die Form (10) wenigstens ein radialein- und radialauswärts bewegliches Formsegment (3, 5) aufweist, welches ein Schließsegment bildet.

6. Verfahren zur Herstellung eines Wabenkörpers mit einer Vielzahl von für ein Fluid durchlässigen Kanälen aus einer Vielzahl von zumindest teilweise strukturierten Blechen, bei dem
- wenigstens ein Stapel (1) aus einer Mehrzahl von zumindest teilweise strukturierten Blechen geschichtet wird,
- jeder Stapel (1) in eine offene Form (10) eingebracht und in dieser von einer Halteeinrichtung in einem Zentralbereich gehalten wird,
- wenigstens zwei Formsegmente (2, 4) aus ihren Ausgangslagen jeweils so verschoben werden, daß wenigstens ein Teilabschnitt (11, 12) eines jeden Mantelabschnittes (6, 8) zur Anlage am Stapel (1) gelangt, danach entlang einer der Außenform entsprechenden Bewegungsbahn bewegt werden bis ein vorgegebener Umschlingungsgrad erreicht ist und anschließend die Form (10) geschlossen wird.

7. Verfahren nach Anspruch 6, bei dem
eine Mehrzahl von Stapeln (1) aus einer Mehrzahl von zumindest teilweise strukturierten Blechen geschichtet und jeder Stapel (1) um je eine Knicklinie gefaltet wird.

## Claims

1. Apparatus for the production of a honeycomb body, in particular a catalyst carrier body, from at least one stack (1) comprising a plurality of at least partially structured sheets which form a plurality of passages through which a fluid can pass, wherein the apparatus has a fork-shaped holding device which engages each stack (1) and mould segments (2, 3, 4, 5) which can close to form a mould (10), wherein each mould segment (2, 3, 4, 5) has a respective peripheral surface portion (6, 7, 8, 9) which jointly when the mould (10) is closed afford the external shape of the honeycomb body to be produced, characterised in that there are provided at least two mould segments (2, 4) which are arranged displaceably in such a way that at least a part (11, 12) of each peripheral surface portion (6, 8) in a condition of bearing against the stack (1) describes a path of movement, corresponding to the external shape, in the direction of the respective free end of the stack (1).

2. Apparatus according to claim 1 characterised in that the mould segments (2, 4) are displaceable in the same direction (R).

3. Apparatus according to claim 1 or claim 2 characterised in that the mould segments (2, 4) are positioned in opposite relationship in their respective starting position, preferably in pairs.

4. Apparatus according to one of claims 1 to 3 characterised in that the mould segments (2, 4) are displaceable synchronously.

5. Apparatus according to one of the preceding claims characterised in that the mould (10) has at least one radially inwardly and radially outwardly movable mould segment (3, 5) which forms a closing segment.

6. A process for the production of a honeycomb body having a plurality of passages through which a fluid can pass, from a plurality of at least partially structured sheets, wherein
- at least one stack (1) is formed in layered relationship from a plurality of at least partially structured sheets,
- each stack (1) is introduced into an open mould (10) and held therein by a holding device in a central region, and
- at least two mould segments (2, 4) are respectively displaced from their starting positions in such a way that at least a part (11, 12) of each peripheral surface portion (6, 8) comes to bear against the stack (1), are thereafter moved along a path of movement corresponding to the external shape until a predetermined degree of wrapping is achieved and then the mould (10) is closed.

7. A process according to claim 6 wherein
- a plurality of stacks (1) is formed in layered relationship from a plurality of at least partially structured sheets and each stack (1) is folded about a respective bend line, and
- at least two mould segments (2, 4) are respectively displaced from their starting positions in such a way that at least a part (11, 12) of each peripheral surface portion (6, 8) comes to bear against the stack (1), are thereafter moved along a path of movement corresponding to the external shape until a predetermined degree of wrapping is achieved and then the mould (10) is closed.

## Revendications

1. Dispositif destiné à la fabrication d'un corps alvéolaire, notamment d'un corps de support de catalyseur, constitué d'au moins une pile (1) d'une pluralité de tôles au moins partiellement structurées qui forment une pluralité de canaux pouvant être traversés par un fluide, le dispositif comportant un dispositif de retenue en forme de fourche qui saisit chaque pile (1), et des segments de gabarit (2, 3, 4, 5) pouvant se fermer pour former un gabarit (10), chaque segment de gabarit (2, 3, 4, 5) comportant une section d'enveloppe (6, 7, 8, 9), lesquelles, lorsque le gabarit (10) est fermé, constituent en commun la forme extérieure du corps alvéolaire à fabriquer
caractérisé en ce qu'il est prévu au moins deux segments de gabarit (2, 4), qui sont disposés de façon à pouvoir être déplacés de telle sorte qu'au moins une section partielle (11, 12) de chaque section d'enveloppe (6, 8) s'appliquant contre la pile (1) décrive en direction de l'extrémité libre respective de la pile (1) une trajectoire de déplacement correspondant à la forme extérieure.

2. Dispositif selon la revendication 1, caractérisé en ce que les segments de gabarit (2, 4) peuvent être déplacés dans le même sens (R) de direction.

3. Dispositif selon la revendication 1 ou 2, caractérisé en ce que, dans leurs positions de départ respectives, les segments de gabarit (2, 4) sont positionnés les uns en face des autres, de préférence par couples.

4. Dispositif selon l'une quelconque des revendications 1 à 3, caractérisé en ce que les segments de gabarit (2, 4) peuvent être déplacés de façon synchronisée.

5. Dispositif selon l'une quelconque des revendications précédentes, caractérisé en ce que le gabarit (10) comporte au moins un segment de gabarit (3, 5) pouvant être déplacé radialement vers l'intérieur et vers l'extérieur, lequel forme un segment de fermeture

6. Procédé destiné à la fabrication d'un corps alvéolaire comportant une pluralité de canaux pouvant être traversés par un fluide, constitué d'une pluralité de tôles au moins partiellement structurées, dans lequel
- au moins une pile (1) constituée d'une pluralité de tôles au moins partiellement structurées est empilée,
- chaque pile (1) est introduite dans un gabarit (10) ouvert et maintenue dans ce dernier dans une zone centrale par un dispositif de retenue,
- au moins deux segments de gabarit (2, 4) sont déplacés de leurs positions de départ de telle sorte qu'au moins une section partielle (11, 12) de chaque section d'enveloppe (6, 8) soit appliquée contre la pile (1), que ces dernières soient ensuite déplacées le long d'une trajectoire de déplacement correspondant à la forme extérieure jusqu'à ce qu'un degré d'enroulement prédéfini soit atteint, et qu'après cela le gabarit (10) soit fermé.

7. Procédé suivant la revendication 6, dans lequel
- une pluralité de piles (1) constituées d'une pluralité de tôles au moins partiellement structurées sont empilées, chaque pile (1) étant repliée autour d'une ligne d'inflexion.
